# EUROPÄISCHE PATENTANMELDUNG

(11) **EP 2 067 683 A2**
(43) Veröffentlichungstag der Anmeldung: **10.06.2009**
(21) Anmeldenummer: 08450099.0
(22) Anmeldetag: 03.07.2008
(51) Int. Cl.: B61B 12/00

(54) **Verfahren zur Herstellung eines Wandteiles für eine Kabine bzw. einer Abdeckhaube für einen Sessel einer Seilbahnanlage**

(30) Priorität: 03.12.2007 AT 19632007
(71) Anmelder: Innova Patent GmbH, 6960 Wolfurt (AT)
(72) Erfinder: Assmann, Ekkehard, Mag., 6850 Dornbirn (AT)
(74) Vertreter: Hehenberger, Reinhard

(57) **Zusammenfassung**

Verfahren zur Herstellung eines Wandteiles für eine Kabine einer Seilbahnanlage bzw. einer Abdeckhaube (3) zur Verwendung bei einem Sessel einer Seilbahnanlage, wobei eine Platte aus einem Kunststoffmaterial, insbesondere aus Polycarbonat, in eine beheizbare Form eingelegt und in dieser zur Herstellung des Wandteiles bzw. der Abdeckhaube (3) verpresst wird Dabei enthält das Kunststoffmaterial der Platte mindestens einen Farbstoff, wobei aufgrund von unterschiedlichen Farbtönungen des Wandteiles bzw. der Abdeckhaube (3) unterschiedliche Wandstärken und zu geringe Wandstärken desselben bzw. derselben festgestellt werden.

## Beschreibung

Die gegenständliche Erfindung betrifft ein Verfahren zur Herstellung eines Wandteiles für eine Kabine einer Seilbahnanlage bzw. einer Abdeckhaube zur Verwendung bei einem Sessel für eine Seilbahnanlage, wobei eine Platte aus einem Kunststoffmaterial, insbesondere aus Polycarbonat, in eine beheizbare Form eingelegt und in dieser zur Herstellung des Wandteiles bzw. der Abdeckhaube verpresst wird.

Bekannte Seilbahnkabinen sind überwiegend mit Wandteilen aus einem durchsichtigen Kunststoffmaterial ausgebildet. Ebenso sind die Abdeckhauben für Sessel von Seilbahnanlagen aus einem durchsichtigen Kunststoffmaterial hergestellt. Der Vorteil der Ausbildung von Seilbahnkabinen mit einer sehr großen Anzahl von durchsichtigen Wandteilen bzw. von Abdeckhauben für Sessel, welche durchsichtig ausgebildet sind, besteht im besonderen Komfort für die Benützer der Kabinen bzw. der Sessel, welchen hierdurch eine weitgehend uneingeschränkte Sicht in die Landschaft ermöglicht wird.

Die für Kabinen erforderlichen durchsichtigen Wandteile bzw. Abdeckhauben für Sessel, welche aus einem Kunststoffmaterial, z.B. aus Polycarbonat, bestehen, werden dadurch hergestellt, dass Platten des Kunststoffmaterials in beheizten Formen verpresst werden, wodurch die angestrebten räumlichen Gestaltungen erzielt werden.

Wandteile für Seilbahnkabinen bzw. Abdeckhauben für Sessel müssen deshalb weitgehend konstante Wandstärken von etwa 3 mm bis 5 mm aufweisen, um hierdurch die erforderliche Festigkeit zu gewährleisten. Bei der Herstellung dieser Wandteile bzw. der Abdeckhauben tritt jedoch die Schwierigkeit auf, dass aufgrund der durch die unterschiedlichen räumlichen Gestaltungen bedingten Widerstände bei der Verformung des Kunststoffmaterials sich solche Bereiche ausbilden können, welche zu geringe Wandstärken aufweisen. Dies trifft insbesondere für Eckbereiche zu. Sofern dieser Mangel nicht erkannt wird, werden diese Produkte weiterverarbeitet, d.h. sie werden in Kabinen bzw. für Sessel verwendet, wobei dann infolge der zu geringen Festigkeit innerhalb kurzer Betriebszeiten Beschädigungen, insbesondere Brüche, auftreten, welche es erfordern, die betreffenden Wandteile bzw. Abdeckhauben durch neue Wandteile bzw. neue Abdeckhauben zu ersetzen.

Der gegenständlichen Erfindung liegt somit die Aufgabe zugrunde, Maßnahmen vorzusehen, durch welche derartige Produktionsmängel eines Wandteiles bzw. einer Abdeckhaube unmittelbar erkennbar sind, wodurch es ermöglicht wird, diese Wandteile bzw. diese Abdeckhauben sofort auszuscheiden. Diese Aufgabe wird erfindungsgemäß dadurch gelöst, dass das Kunststoffmaterial der Platte mindestens einen Farbstoff enthält, wobei aufgrund von unterschiedlichen Farbtönungen des Wandteiles bzw. der Abdeckhaube unterschiedliche Wandstärken und zu geringe Wandstärken desselben bzw. derselben festgestellt werden.
Vorzugsweise weist die Platte aus Kunststoffmaterial eine Dicke von 3 mm bis 5 mm auf.

Ein erfindungsgemäßer Wandteil bzw. eine Abdeckhaube für einen Sessel einer Seilbahnanlage ist nach dem vorstehend angeführten Verfahren hergestellt.

Das erfindungsgemäße Verfahren ist nachstehend anhand eines in der Zeichnung dargestellten Ausführungsbeispiels näher erläutert. Es zeigen:
- FIG.1: einen mit einer Abdeckhaube ausgebildeten Sessel für eine Seilbahnanlage, wobei sich die Abdeckhaube in der Offenstellung befindet, in axonometrischer Darstellung, und
- FIG.2: den Sessel gemäß FIG.1 bei in Schließstellung befindlicher Abdeckhaube, gleichfalls in axonometrischer Darstellung.

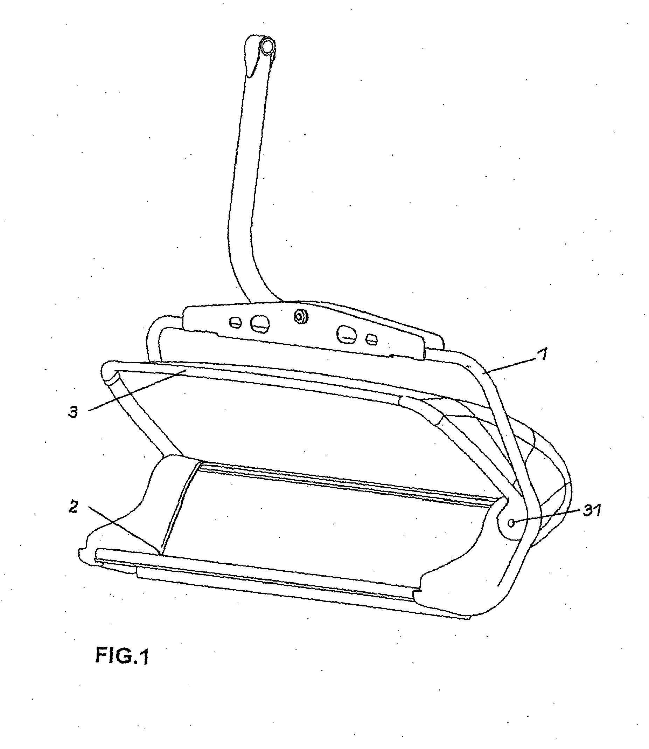

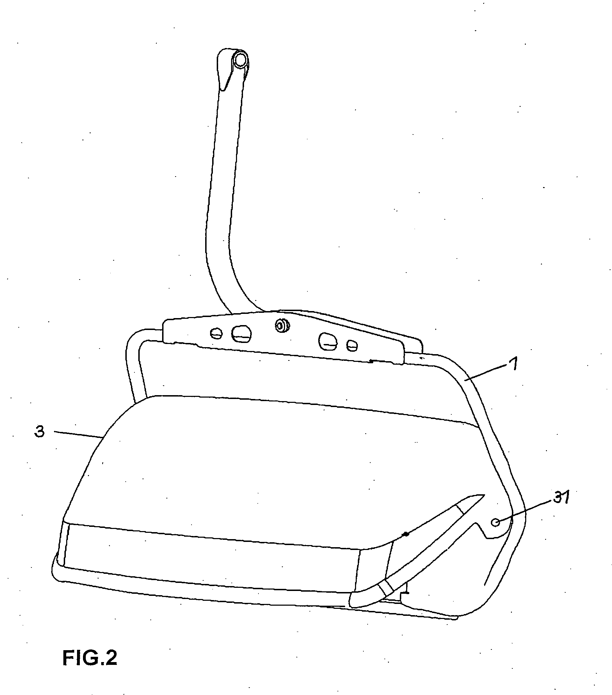

Der in FIG.1 dargestellte Sessel für eine Seilbahnanlage besteht aus einem Tragrahmen 1, welcher eine Sitzfläche 2 für mehrere Passagiere aufweist. Zum Schutz der Passagiere ist weiters am Tragrahmen 1 eine Abdeckhaube 3 um eine Achse 31 verschwenkbar gelagert. In der in FIG.1 dargestellten Offenstellung der Abdeckhaube 3 können Passagiere auf den Sessel aufsitzen bzw. können sie diesen verlassen. Sofern die Passagiere während der Fahrt auf einer Seilbahnanlage gegenüber Wind, Schneefall oder sonstigen klimatischen Einwirkungen geschützt sein möchten, wird die Abdeckhaube 3 in die in FIG.2 dargestellte Schließstellung verschwenkt.

Die Abdeckhaube 3 ist vollständig bzw. in wesentlichen Teilen aus einem Kunststoffmaterial, insbesondere aus Polycarbonat, hergestellt, welchem mindestens ein Farbstoff beigefügt ist. Aufgrund der Beifügung eines Farbstoffes ist es nach der Herstellung der Abdeckhaube deshalb erkennbar, ob sie die für die angestrebte Festigkeit erforderliche Wandstärke von etwa 3 mm bis etwa 5 mm aufweist, da Bereiche mit einer geringen Wandstärke eine hellere Tönung aufweisen als Bereiche mit einer größeren Wandstärke.

Sofern bei einer Abdeckhaube festgestellt wird, dass sie einen Bereich oder mehrere Bereiche mit zu geringer Wandstärke aufweist und somit offensichtlich nicht die erforderliche Festigkeit gewährleistet, wird sie ausgesondert. Da hierdurch produktionsbedingte Beschädigungen, insbesondere Brüche, weitestgehend ausgeschlossen werden, werden ansonsten erforderliche Austauschvorgänge vermieden, wodurch maßgebliche Kosteneinsparungen erzielt werden.

Durch die Herstellung von Abdeckhauben aus einem Kunststoffmaterial, welches einen Farbstoff enthält, werden weiters eine rasche Erwärmung der Abdeckhaube bzw. eine beschleunigte Enteisung derselben bewirkt. Weiters wird durch eine derartige Abdeckhaube ein Blendschutz für die Benützer des Sessels bewirkt.

Derartige Abdeckhauben können sowohl bei an das Trag- und Förderseil einer Seilbahnanlage starr befestigten Sesseln als auch an das Trag- und Förderseil ankuppelbaren Sesseln verwendet werden.
Analoge Vorteile treffen auch für mit durchsichtigen Wandteilen ausgebildete Kabinen für Seilbahnanlagen zu.

## Patentansprüche

1. Verfahren zur Herstellung eines Wandteiles für eine Kabine einer Seilbahnanlage bzw. einer Abdeckhaube (3) zur Verwendung bei einem Sessel einer Seilbahnanlage, wobei eine Platte aus einem Kunststoffmaterial, insbesondere aus Polycarbonat, in eine beheizbare Form eingelegt und in dieser zur Herstellung des Wandteiles bzw. der Abdeckhaube (3) verpresst wird, **dadurch gekennzeichnet, dass** das Kunststoffmaterial der Platte mindestens einen Farbstoff enthält, wobei aufgrund von unterschiedlichen Farbtönungen des Wandteiles bzw. der Abdeckhaube (3) unterschiedliche Wandstärken und zu geringe Wandstärken desselben bzw. derselben festgestellt werden.

2. Verfahren nach Patentanspruch 1, **dadurch gekennzeichnet, dass** die Platte aus Kunststoffmaterial eine Dicke von 3 mm bis 5 mm aufweist.

3. Kabine bzw. Sessel für eine Seilbahnanlage, welcher mit einer Abdeckhaube (3) ausgebildet ist, welche von der Offenstellung in die Schließstellung verschwenkbar ist, **dadurch gekennzeichnet, dass** Wandteile der Kabine bzw. die Abdeckhaube (3) des Sessels (1) mittels des Verfahrens nach einem der Patentansprüche 1 und 2 hergestellt sind bzw. ist.
